# EUROPÄISCHE PATENTANMELDUNG

(11) **EP 4 124 525 A1**
(43) Veröffentlichungstag der Anmeldung: **01.02.2023**
(21) Anmeldenummer: 22178942.3
(22) Anmeldetag: 14.06.2022
(51) Int. Cl.: B60T 8/17, B60T 8/1755, B60W 30/18, B60Q 1/34

(54) **VERFAHREN ZUR ERKENNUNG EINES AUSWEICHMANÖVERS UND ANSTEUERUNG EINES FAHRERASSISTENZSYSTEMS IN EINEM EINSPURFAHRZEUG**

(30) Priorität: 27.07.2021 DE 102021208090
(71) Anmelder: Robert Bosch GmbH, 70442 Stuttgart (DE)
(72) Erfinder: Wahl, Anja, 71706 Markgroeningen (DE); Klews, Matthias, 72076 Tuebingen (DE)

(57) **Zusammenfassung**

Bei einem Verfahren zur Erkennung eines Ausweichmanövers und Ansteuerung eines Fahrerassistenzsystems in einem Einspurfahrzeug wird das Lenkmoment ermittelt, wobei ein Ausweichmanöver erkannt wird, falls der Verlauf des Lenkmoments oder der Lenkmomentänderung einen zugeordneten Grenzwert übersteigt. Im Fall eines erkannten Ausweichmanövers wird die Parametrierung des Fahrerassistenzsystems geändert.

## Beschreibung

Die Erfindung bezieht sich auf ein Verfahren zur Erkennung eines Ausweichmanövers und Ansteuerung eines Fahrerassistenzsystems in einem Einspurfahrzeug.

### Stand der Technik

Bekannt ist es, in Personenkraftwagen autonom bremsende Systeme einzusetzen, die verschiedene Fahrsituationen erkennen und hiervon abhängig selbsttätig einen Systemeingriff in das Bremssystem durchführen, den Bremszeitpunkt anpassen oder ganz unterdrücken.

Die EP 2 404 195 B1 beschreibt ein Verfahren zur Erkennung eines eingeleiteten Überhol- oder Ausweichmanövers eines Kraftfahrzeugs, bei dem auf der Grundlage von Fahrzeugzustandsgrößen die Fahrtrajektorie des Kraftfahrzeugs vorausberechnet wird. Hierbei werden als längs- und querdynamische Bewegungsinformationen der Gierwinkel, die Querbeschleunigung, der Lenkwinkel und die Raddrehzahlen verwendet. Abhängig von dem erkannten Ausweich- oder Überholwunsch erfolgt ein selbsttätiger Eingriff in ein Fahrerassistenzsystem.

Aus der DE 10 2010 006 215 A1 ist ein Verfahren zur Erkennung eines Ausweich- oder Überholvorgangs eines Kraftfahrzeugs bekannt, bei dem abhängig von der Relativbewegung des Fahrzeugs zu einem detektierten Kollisionsobjekt der Ausweichvorgang bestimmt wird.

Aus der DE 601 26 398 T2 ist ein Bremssteuerungssystem in einem Kraftfahrzeug bekannt, bei dem im Falle eines erkannten Fahrbahnwechsels ein automatischer Bremseingriff unterdrückt wird.

Die US 2017028971 betrifft ein motorisiertes Zweirad, bei dem im Falle einer erkannten Kollisionsgefahr über einen Notbremsassistenten eine autonome Bremsung ohne Fahrereingriff durchgeführt wird.

### Offenbarung der Erfindung

Das erfindungsgemäße Verfahren bezieht sich auf Einspurfahrzeuge, insbesondere motorisierte Einspurfahrzeuge wie Motorräder oder Motorroller. Mithilfe des Verfahrens kann ein Ausweichmanöver des Einspurfahrzeugs erkannt werden und, sofern ein Ausweichmanöver vorliegt, ein Fahrerassistenzsystem im Einspurfahrzeug selbsttätig angesteuert werden.

Das Ausweichmanöver soll alle Lenkmanöver umfassen, bei denen die Lenkhandhabe des Einspurfahrzeugs eine verhältnismäßig scharfe Lenkbewegung durchführt, ungeachtet dessen, ob einem vorausliegenden Hindernis auf der Fahrbahn ausgewichen wird oder ob es sich um ein sonstiges Lenkmanöver handelt, beispielsweise um einen Fahrspurwechsel. Das Ausweichmanöver wird von dem Fahrer des Einspurfahrzeugs durchgeführt.

Zur Erkennung eines möglichen Ausweich- bzw. Lenkmanövers wird im Einspurfahrzeug das Lenkmoment ermittelt und ausgewertet. Ein Ausweich- bzw. Lenkmanöver liegt vor, falls der Verlauf des Lenkmoments und/oder der Lenkmomentänderung einen zugeordneten Grenzwert übersteigt. Im Fall eines erkannten Ausweich- bzw. Lenkmanöver wird die Parametrierung des Fahrerassistenzsystems im Einspurfahrzeug geändert.

Mit dieser Vorgehensweise wird der Tatsache Rechnung getragen, dass das Lenksystem bei Einspurfahrzeugen Bestandteil des fahrdynamischen Zustandes ist und bei einer fahrdynamischen Betrachtung nicht abgekoppelt werden kann. Der Lenkwinkel stellt eine Fahrzustandsgröße dar, die sich in Abhängigkeit des aufgebrachten Lenkmoments sowie weiterer Fahrzustandsgrößen im Einspurfahrzeug einstellt. Das Einspurfahrzeug wird durch den Fahrer fortlaufend über das Lenkmoment stabilisiert, wofür üblicherweise nur kleine Lenkmomente bzw. Lenkmomentänderungen erforderlich sind.

Bei Einspurfahrzeugen sind während eines Ausweichvorgangs mit Bremseingriff höhere Lenkmomente erforderlich, wodurch ein Ausweichmanöver insbesondere für ungeübte Fahrer erschwert wird. Bei dem erfindungsgemäßen Verfahren wird die Durchführung eines Ausweichmanövers erleichtert, indem die Parametrierung eines Fahrerassistenzsystems geändert wird. Mithilfe des Fahrerassistenzsystems wird beispielsweise das Bremssystem im Einspurfahrzeug angesteuert und die Parametrierung des Bremssystems geändert. Hierbei wird insbesondere das Bremsmoment reduziert oder auf einen Maximalwert begrenzt. Die Reduzierung kann gegebenenfalls bis auf null erfolgen, so dass kein Bremsmoment appliziert wird.

Die Vorgabe der Bremsmomentreduzierung bzw. des Maximalwerts, auf den das Bremsmoment begrenzt wird, kann sowohl das vom Fahrer vorgegebene Bremsmoment als auch ein von einem Bremsassistenten vorgegebenes Bremsmoment betreffen. Es können somit sowohl vom Fahrer erzeugte Bremsmomente als auch autonom mithilfe eines Bremsassistenten applizierte Bremsmomente eingeschränkt werden. Die Reduzierung des Bremsmoments bzw. Begrenzung auf einen Maximalwert kann sich sowohl auf ein bereits zum Zeitpunkt des Auslösens des Ausweichmanövers vorliegendes Bremsmoment als auch auf ein während der Durchführung eines Ausweichmanövers aufzubringendes oder aufgebrachtes Bremsmoment beziehen. In jedem Fall wird die Durchführung des Ausweichmanövers signifikant erleichtert.

Für die Erkennung des Ausweichmanövers können sowohl der Verlauf des Lenkmoments als auch der Verlauf der Lenkmomentänderung herangezogen werden. Es genügt für die Erkennung eines Ausweichmanövers, dass entweder nur das Lenkmoment oder nur die Lenkmomentänderung einen zugeordneten Grenzwert übersteigt. Es kann aber auch vorteilhaft sein, dass sowohl das Lenkmoment als auch die Lenkmomentänderung einen jeweils zugeordneten Grenzwert übersteigen müssen, damit mit hinreichender Sicherheit ein Ausweichmanöver erkannt wird.

Bei dem Fahrerassistenzsystem handelt es sich vorzugsweise um einen Bremsassistenten zur Beeinflussung des Bremsmoments im Bremssystem des Einspurfahrzeugs. Zusätzlich oder alternativ ist es auch möglich, sonstige Fahrerassistenzsysteme neu zu parametrieren, beispielsweise ein Assistenzsystem, mit dem das Antriebsmoment des Antriebsmotors im Einspurfahrzeug ansteuerbar ist.

Die Berücksichtigung des Lenkmoments erlaubt die Erkennung eines Ausweichmanövers in kürzestmöglicher Zeit und somit schneller, als dies bei einer Betrachtung von fahrdynamischen Zustandsgrößen wie Lenkwinkel, Gierrate oder Querbeschleunigung möglich wäre, die bei einem Spurversatz zu Manöverbeginn entgegen der eigentlich gewünschten Ausweichrichtung reagieren.

Es kann zweckmäßig sein, dass bei der Erkennung eines Ausweichmanövers zusätzlich sensorisch ermittelte, fahrdynamische Zustandsgrößen berücksichtigt werden. Hierbei handelt es sich beispielsweise um die Längs- und Querbeschleunigung sowie um die Drehraten des Einspurfahrzeugs um die Längsachse, die Querachse und/oder die Hochachse, um die Fahrzeuggeschwindigkeit sowie gegebenenfalls weitere fahrdynamische Zustandsgrößen. Gegebenenfalls kann auch der Bremsdruck im Bremssystem mit hydraulischer Ausführung berücksichtigt werden. Indem zusätzlich die fahrdynamischen Zustandsgrößen sowie gegebenenfalls der Bremsdruck bei der Erkennung eines Ausweichmanövers beachtet werden, kann die Genauigkeit im Hinblick auf die Erkennung erhöht werden, dass es sich bei dem betrachteten Fahrmanöver tatsächlich um ein Ausweichmanöver handelt.

Gemäß noch einer weiteren vorteilhaften Ausführung wird bei der Erkennung eines Ausweichmanövers das unmittelbar davor ausgeführte Fahrmanöver berücksichtigt. Es handelt sich hierbei um den Ausgangszustand vor einem Ausweichwunsch, bei dem das Einspurfahrzeug beispielsweise geradeaus fährt oder eine Kreisfahrt vollführt, was im Hinblick auf die Genauigkeit bei der Erkennung des Ausweichwunsches beachtet werden kann.

Gemäß noch einer weiteren vorteilhaften Ausführung kommt bei der Ausweichwunscherkennung ein mathematisches Modell zum Einsatz, auf dessen Basis das in die Zukunft gerichtete Fahrmanöver ermittelt wird. Das mathematische Modell erlaubt es, ausgehend vom Ausgangszustand für einen kurzen Zeithorizont von beispielsweise 1s bis 2s die wesentlichen Fahrzustände sowie die Fahrtrajektorie vorauszuberechnen. Dem mathematischen Modell werden Sensorinformationen mit Fahrzustandsgrößen als Eingangsgrößen zugeführt.

Gemäß einer weiteren vorteilhaften Ausführung erfolgt die Anpassung der Bremsansteuerung bei erkanntem Ausweichmanöver im Falle einer autonomen Bremsung in unterschiedlicher Weise gegenüber einer selbstinitiierten Bremsung. Falls der Fahrer bereits mit Beginn des Ausweichmanövers das Bremssystem betätigt, kann das von ihm initiierte Bremsmoment reduziert werden, damit das Ausweichmanöver leichter durchgeführt werden kann. Gegebenenfalls wird das Bremsmoment wieder erhöht, sobald das Lenkmoment oder die Lenkmomentänderung unter einen zugeordneten Grenzwert fallen. Eine autonome Bremsung wird während des Ausweichmanövers entweder verhindert oder es wird das Bremsmoment der autonomen Bremsung auf einen Maximalwert begrenzt. Auch ein vom Fahrer während des Ausweichmanövers initiiertes Bremsmoment kann entweder verhindert oder auf einen Maximalwert begrenzt werden.

Des Weiteren ist es möglich, auch die Kriterien für die Erkennung eines Ausweichmanövers im Falle eines selbstinitiierten Bremsvorgangs und eines autonomen Bremsvorgangs unterschiedlich zu setzen. Dies betrifft insbesondere den Grenzwert bzw. die Grenzwerte, die für das Lenkmoment bzw. die Lenkmomentänderung gelten und bei deren Überschreitung von einem Ausweichmanöver ausgegangen werden muss.

Gemäß noch einer weiteren vorteilhaften Ausführung wird im Falle eines erkannten Ausweichmanövers selbsttätig ein Fahrtrichtungsblinker aktiviert, wodurch die Fahrsicherheit sowohl für das Einspurfahrzeug als auch für die weiteren Verkehrsteilnehmer erhöht ist.

Die Erfindung bezieht sich außerdem auf ein Steuergerät, das Mittel enthält, die zur Durchführung des vorbeschriebenen Verfahrens ausgestaltet sind. Die Mittel umfassen mindestens eine Speichereinheit, mindestens eine Recheneinheit, einen Steuergeräteeingang und einen Steuergeräteausgang. Mithilfe des Steuergeräts, das sich im Einspurfahrzeug befindet, kann ein Ausweichmanöver erkannt und ein die Parametrierung eines Fahrerassistenzsystems bei erkanntem Ausweichmanöver eingestellt werden. Es kann gegebenenfalls zweckmäßig sein, zwei Steuergeräte vorzusehen, auf die sich die Funktionen verteilen, so dass in einem ersten Steuergerät das Ausweichmanöver erkannt und in einem zweiten Steuergerät die Parametrierung geändert wird.

Die Erfindung bezieht sich des Weiteren auf ein Computerprogrammprodukt mit einem Programmcode, der dazu ausgelegt ist, die vorbeschriebenen Verfahrensschritte auszuführen. Das Computerprogrammprodukt läuft in dem vorbeschriebenen Steuergerät oder in mehreren Steuergeräten ab.

Die Erfindung bezieht sich außerdem auf ein Einspurfahrzeug, das mit einem Lenkmomentsensor zur Erfassung des Lenkmoments und mit einem Steuergerät oder einer Kombination von Steuergeräten zur Erkennung eines Ausweichmanövers und zur Parametrierung eines Fahrerassistenzsystems bei erkanntem Ausweichmanöver ausgestattet ist.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht eines Motorrades, das mit einem Steuergerät ausgestattet ist, in welchem auf der Grundlage eines Lenkmomentsignals ein Ausweichmanöver erkannt und die Parametrierung eines Bremsassistenten geändert wird,
- Fig. 2: ein Ablaufdiagramm mit Verfahrensschritten zur Erkennung eines Ausweichmanövers.

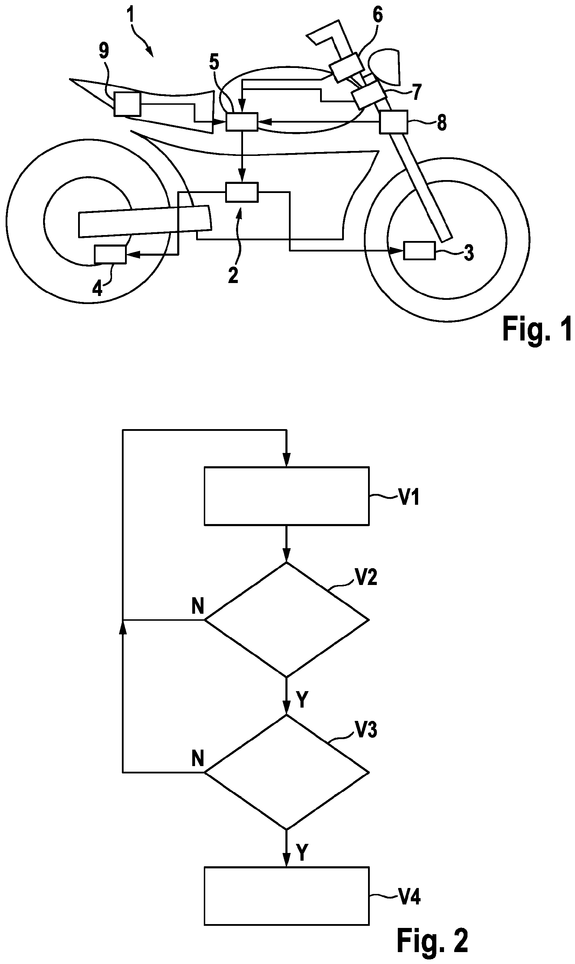

In Fig. 1 ist ein als Motorrad 1 ausgeführtes Einspurfahrzeug schematisch dargestellt. Das Motorrad 1 ist mit einem hydraulischen Bremssystem 2 versehen, das eine vordere Bremseinheit 3 am Vorderrad, eine hintere Bremseinheit 4 am Hinterrad sowie ein Bremsensteuergerät und eine Hydraulikpumpe zur Einstellung des hydraulischen Bremsdrucks umfasst. In dem Bremsensteuergerät ist ein Bremsassistent realisiert, mit dem fahrerunabhängig ein autonomer Bremseingriff durchführbar ist. Dem Bremsassistenten kommt die Funktion eines Fahrerassistenzsystems zu.

Das Motorrad 1 ist in an sich üblicher Weise mit einem Antriebsmotor ausgestattet. Des Weiteren ist das Motorrad 1 mit einem Steuergerät 5 versehen, in welchem Sensorsignale einer Sensorik mit einem Lenkmomentsensor 6, einem Lenkwinkelsensor 7, einem Umgebungssensor 8 und einem Inertialsensor 9 verarbeitet werden. Der Lenkmomentsensor 6 liefert das Lenkmoment, welches der Fahrer auf die Lenkhandhabe ausübt. Der Lenkwinkelsensor 7 misst den Lenkwinkel, mit dem die Lenkhandhabe gegenüber der Neutralstellung ausgelenkt ist, wobei die Neutralstellung der Geradeausfahrt entspricht. Der Umgebungssensor 8 kann die Umgebung des Motorrades 1 erfassen, insbesondere im vorausliegenden und seitlichen Bereich des Motorrades. Die Umgebung wird entweder auf optische Weise mithilfe einer Kamera oder mithilfe von Radarstrahlen erfasst.

Über den Intertialsensor 9 können Fahrzustandsgrößen des Motorrades erfasst werden, unter anderem die Fahrzeuggeschwindigkeit, die Längs- und Querbeschleunigung sowie die Drehraten um die Fahrzeuglängsachse, die Fahrzeugquerachse und die Fahrzeughochachse.

Gegebenenfalls ist das Motorrad 1 auch mit Raddrehzahlsensoren zur Erfassung der Raddrehzahlen von Vorderrad und Hinterrad ausgestattet.

Auf der Grundlage des im Lenkmomentsensor 6 ermittelten Lenkmoments kann ein vom Fahrer eingeleitetes Ausweichmanöver erkannt werden. Für den Fall, dass ein Ausweichmanöver eingeleitet wird, wird der Bremsassistent im Bremssystem 2 neu parametriert, um sicherzustellen, dass das im Bremssystem erzeugte Bremsmoment einen Grenzwert nicht überschreitet. Hierdurch ist die Lenkbarkeit auch für unerfahrene Fahrer während eines Ausweichmanövers gewährleistet. Der Grenzwert für das Bremsmoment kann gegebenenfalls auf den Wert null gesetzt werden.

Fig. 2 zeigt ein Ablaufdiagramm mit Verfahrensschritten zur Erkennung eines Ausweichmanövers und zur Änderung der Parametrierung im Bremsassistenten. Im ersten Verfahrensschritt V1 wird fortlaufend das Lenkmoment gemessen. Im nächsten Verfahrensschritt V2 wird das gemessene Lenkmoment im Hinblick auf ein mögliches Ausweichmanöver, welches der Fahrer einleitet, ausgewertet. Ein derartiges Ausweichmanöver liegt vor, falls das Lenkmoment einen Grenzwert überschreitet. Alternativ kann auch die Lenkmomentänderung betrachtet werden, wobei ein Ausweichmanöver vorliegt, falls die Lenkmomentänderung einen zugeordneten Grenzwert überschreitet. Gegebenenfalls wird eine Kombination der beiden Kriterien betreffend das Lenkmoment und die Lenkmomentänderung durchgeführt.

Unter Ausweichmanöver wird eine plötzliche Lenkänderung verstanden, unabhängig davon, ob sich auf der Fahrbahn ein Hindernis befindet, welches umfahren werden soll. Das Ausweichmanöver kann daher auch beispielsweise einen plötzlich eingeleiteten Spurwechsel umfassen.

Ergibt die Auswertung im Verfahrensschritt V2, dass die Bedingungen für ein Ausweichmanöver nicht erfüllt sind, wird der Nein-Verzweigung ("N") folgend wieder zum Verfahrensschritt V1 zurückgekehrt, der in zyklischen Abständen erneut durchlaufen wird. Ergibt dagegen die Abfrage im Verfahrensschritt V2, dass die Bedingungen für ein Ausweichmanöver erfüllt sind, wird der Ja-Verzweigung ("Y") folgend zum nächsten Verfahrensschritt V3 vorgerückt.

Im Verfahrensschritt V3 werden Zusatzbedingungen abgefragt, die zur Stützung der Annahme, dass tatsächlich ein Ausweichmanöver vorliegt, dienen. Es können hierbei eine oder mehrere Zusatzbedingungen abgefragt werden, die alternativ oder kumulativ erfüllt sein müssen, um von einem Ausweichmanöver auszugehen. Bei den Zusatzbedingungen handelt es sich beispielhaft um das unmittelbar vor der Einleitung des Ausweichmanövers durchgeführte Fahrmanöver, zum Beispiel Kurvenfahrt oder Geradeausfahrt, um die im Inertialsensor 9 ermittelten Fahrzustandsgrößen wie Fahrzeuggeschwindigkeit oder Rollwinkel, die gewisse Kriterien erfüllen müssen, und um den hydraulischen Bremsdruck im Bremssystem 2. Des Weiteren ist es auch möglich, auf der Grundlage eines mathematischen Modells und unter Berücksichtigung aktueller Umgebungsgrößen und Fahrzustandsgrößen das Fahrmanöver in die Zukunft vorauszuberechnen, beispielsweise für 1 s oder 2 s, um auf diese Weise ein Ausweichmanöver zu erkennen. Jede der Bedingungen, die im Verfahrensschritt V3 überprüft werden, dient zur Stützung des im vorherigen Verfahrensschritt V2 bereits auf der Grundlage des aktuellen Lenkmoments oder Lenkmomentänderung festgestellten Ausweichmanövers.

Ergibt die Abfrage im Verfahrensschritt V3, dass eine oder mehrere Zusatzbedingungen nicht erfüllt sind, wird der Nein-Abfrage folgend wieder zum Verfahrensschritt V1 zurückgekehrt. In diesem Fall kann die Annahme, dass ein Ausweichmanöver vorliegt, über die Zusatzbedingungen nicht bestätigt werden.

Andernfalls sind die Zusatzbedingungen erfüllt, und es wird der Ja-Verzweigung folgend zum nächsten Verfahrensschritt V4 vorgerückt, in welchem die Parametrierung im Bremsassistenten geändert wird. Hierbei erfolgt insbesondere eine Reduzierung des maximal möglichen Bremsmoments, was sowohl das vom Fahrer initiierte Bremsmoment als auch ein autonom im Bremsassistenten einzustellendes Bremsmoment umfasst.

Außerdem kann im Verfahrensschritt V4 selbsttätig ein Fahrtrichtungsblinker aktiviert werden.

Mit Beendigung des Ausweichmanövers kann die Parametrierung im Bremsassistenten wieder auf Ausgangswerte zurückgesetzt werden.

## Patentansprüche

1. Verfahren zur Erkennung eines Ausweichmanövers und Ansteuerung eines Fahrerassistenzsystems in einem Einspurfahrzeug (1), bei dem das Lenkmoment im Einspurfahrzeug (1) ermittelt und ausgewertet wird, wobei ein Ausweichmanöver erkannt wird, falls der Verlauf des Lenkmoments und/oder der Lenkmomentänderung einen zugeordneten Grenzwert übersteigt, wobei im Fall eines erkannten Ausweichmanövers die Parametrierung des Fahrerassistenzsystems geändert wird.

2. Verfahren nach Anspruch 1, **dadurch gekennzeichnet, dass** das Lenkmoment mittels eines Lenkmomentsensors (6) im Einspurfahrzeug (1) gemessen wird.

3. Verfahren nach Anspruch 1 oder 2, **dadurch gekennzeichnet, dass** über das Fahrerassistenzsystem das Bremssystem im Einspurfahrzeug (1) angesteuert wird.

4. Verfahren nach Anspruch 3, **dadurch gekennzeichnet, dass** während der Durchführung eines Ausweichmanövers das Bremssystem in der Weise angesteuert wird, dass das Bremsmoment reduziert wird.

5. Verfahren nach Anspruch 3 oder 4, **dadurch gekennzeichnet, dass** während der Durchführung eines Ausweichmanövers das Bremssystem in der Weise angesteuert wird, dass das vom Fahrer vorgegebene oder das von einem Bremsassistenten vorgegebene Bremsmoment auf einen Maximalwert begrenzt wird.

6. Verfahren nach einem der Ansprüche 1 bis 5, **dadurch gekennzeichnet, dass** bei der Erkennung eines Ausweichmanövers zusätzlich sensorisch ermittelte, fahrdynamische Zustandsgrößen berücksichtigt werden.

7. Verfahren nach einem der Ansprüche 1 bis 6, **dadurch gekennzeichnet, dass** bei der Erkennung eines Ausweichmanövers zusätzlich der Bremsdruck im Bremssystem berücksichtigt wird.

8. Verfahren nach einem der Ansprüche 1 bis 7, **dadurch gekennzeichnet, dass** bei der Erkennung eines Ausweichmanövers das unmittelbar davor ausgeführte Fahrmanöver berücksichtigt wird.

9. Verfahren nach einem der Ansprüche 1 bis 8, **dadurch gekennzeichnet, dass** bei der Erkennung eines Ausweichmanövers zusätzlich ein auf der Basis eines mathematischen Modells berechnetes und in die Zukunft gerichtetes Fahrmanöver berücksichtigt wird.

10. Verfahren nach einem der Ansprüche 1 bis 9, **dadurch gekennzeichnet, dass** im Falle eines erkannten Ausweichmanövers selbsttätig ein Fahrtrichtungsblinker aktiviert wird.

11. Steuergerät oder Kombination von Steuergeräten (5), enthaltend Mittel, die zur Durchführung des Verfahrens nach einem oder mehreren der vorhergehenden Ansprüche ausgestaltet sind.

12. Einspurfahrzeug, mit einem Lenkmomentsensor (6) zur Erfassung des Lenkmoments und mit einem Steuergerät (5) oder einer Kombination von Steuergeräten (5) gemäß Anspruch 11.

13. Computerprogrammprodukt mit einem Programmcode, der dazu ausgelegt ist, Schritte des Verfahrens nach einem der Ansprüche 1 bis 10 auszuführen, wenn das Computerprogrammprodukt in einem Steuergerät (5) oder einer Kombination von Steuergeräten (5) gemäß Anspruch 11 abläuft.
